# EUROPÄISCHE PATENTSCHRIFT

(11) **EP 0 810 721 B1**
(45) Veröffentlichungstag und Bekanntmachung des Hinweises auf die Patenterteilung: **08.08.2007**
(21) Anmeldenummer: 97106418.3
(22) Anmeldetag: 18.04.1997
(51) Int. Cl.: H02M 3/337, H02H 7/12, B23K 11/25

(54) **Umrichterschweissanordnung**
Welding converter device
Dispositif convertisseur de soudage

(30) Priorität: 29.05.1996 DE 19621526
(43) Veröffentlichungstag der Anmeldung: 03.12.1997
(73) Patentinhaber: ROBERT BOSCH GMBH, 70442 Stuttgart (DE)
(72) Erfinder: Cohrs, Reinhard, 64720 Michelstadt (DE); Klinger, Thomas, 64747 Breuberg (DE)
(74) Vertreter: Thürer, Andreas

(56) Entgegenhaltungen:
- EP-A- 0 688 626
- WO-A-93/08628
- DE-A- 3 512 834

## Beschreibung

### Stand der Technik

Die Erfindung geht aus von einer Schweißanordnung, wie sie etwa aus der Veröffentlichung "Semiconductor Databook", 1981/82 der Firma INTERNATIONAL RECTIFIER, Seite A-18, bekannt ist. Um kleinere und leichtere Schweißtranformatoren zu ermöglichen, wird ein Netzwechselstrom zunächst gleichgerichtet, aus der Gleichspannung anschließend mittels einer aus vier Leistungshalbleitern aufgebauten Wechselrichterbrücke wieder eine Wechselspannung mit gegenüber der Netzfrequenz erhöhter Frequenz erzeugt. Die Wechselspannung wird sodann dem Schweißtransformator zugeführt, welcher sie auf eine gewünschte Schweißspannung herabsetzt. Bekannte Anordnungen dieser Art sind zur Verwendung bei einer bestimmten festen Netzspannung konzipiert. Auch an Netzen mit einer kleineren als der vorgegebenen Spannung sind sie in der Regel betreibbar. Hingegen ist ein Betrieb an Netzen mit höheren Spannungen als die Bestimmungsbetriebsspannung grundsätzlich nicht ohne weiteres möglich. Ursache hierfür ist insbesondere der Schweißtransformator, der aufgrund seiner magnetischen und Materialeigenschaften eine Übertragung von höheren Leistungen als die bestimmungsgemäß festgelegte Maximalleistung nicht zuläßt. In Fällen, wo eine für eine niedrigere Betriebsspannung konzipierte Schweißanordnung an einem Netz höherer Spannung betrieben werden soll, ist es deshalb üblich, dem Netzgleichrichter einen Vortrafo oder einen Tiefsetzsteller vorzuschalten, um die höhere Netzspannung auf die niedrigere Bestimmungsnetzspannung herabzusetzen. Diese Lösung ist technisch einfach, wirkungsvoll und kann als modulares Element realisiert werden. Sie bedingt aber entsprechend erhöhte Kosten und erhöht vor allem den Raumbedarf für die Schweißanordnung.

Aus der PCT DE 92/00862 ist für eine gattungsgemäße Schweißanordnung der Vorschlag bekannt, den Schweißtransformator auf Sättigung hin zu überwachen. Auf diese Weise sollen ungewöhnlich starke Stromanstiege im Primärkreis frühzeitig erkannt werden. Ziel der Früherkennung solcher Stromanstiege ist es, die zur Realisierung der Wechselrichterbrücke verwendeten, teuren Leistungshalbleiter wirksam vor Zerstörung durch übergroße Ströme im Primärkreis zu schützen.

Der Erfindung liegt die Aufgabe zugrunde, eine Schweißanordnung mit möglichst klein dimensioniertem Schweißtrafo anzugeben, die an Netzen mit unterschiedlichen Spannungen betreibbar ist.

Diese Aufgabe wird gelöst durch eine Schweißanordnung mit den kennzeichnenden Merkmalen des Hauptanspruchs. Eine erfindungsgemäße Schweißanordnung bedarf nur eines Schweißtrafos, der für die kleinste der möglichen Netzspannungen dimensioniert ist. Der Betrieb bei den höheren Spannungen wird durch die erfindungsgemäß vorgesehene Transformatorsättigungsüberwachung ermöglicht. Die vorgeschlagene Anordnung hat den Vorteil, daß nur ein vergleichsweise kleiner, damit platzsparender und kostengünstiger Transformator benötigt wird. In vorteilhafter Weise können zusätzliche Einrichtungen entfallen, um eine erhöhte Netzspannung auf diejenige Spannung herabzusetzen, für welche der Schweißtransformator ausgelegt ist. Indem sie für einen weiten Bereich von die Dauernennspannung eines Schweißtransformators übersteigenden Netzspannungen einsetzbar ist, gestattet die erfindungsgemäße Schweißanordnung eine Typenreduzierung, und trägt damit wiederum zu einer Kostenverminderung bei.

Ein Ausführungsbeispiel einer erfindungsgemäßen Schweißanordnung wird nachfolgend unter Bezugnahme auf die Zeichnung näher erläutert.

### Zeichnung

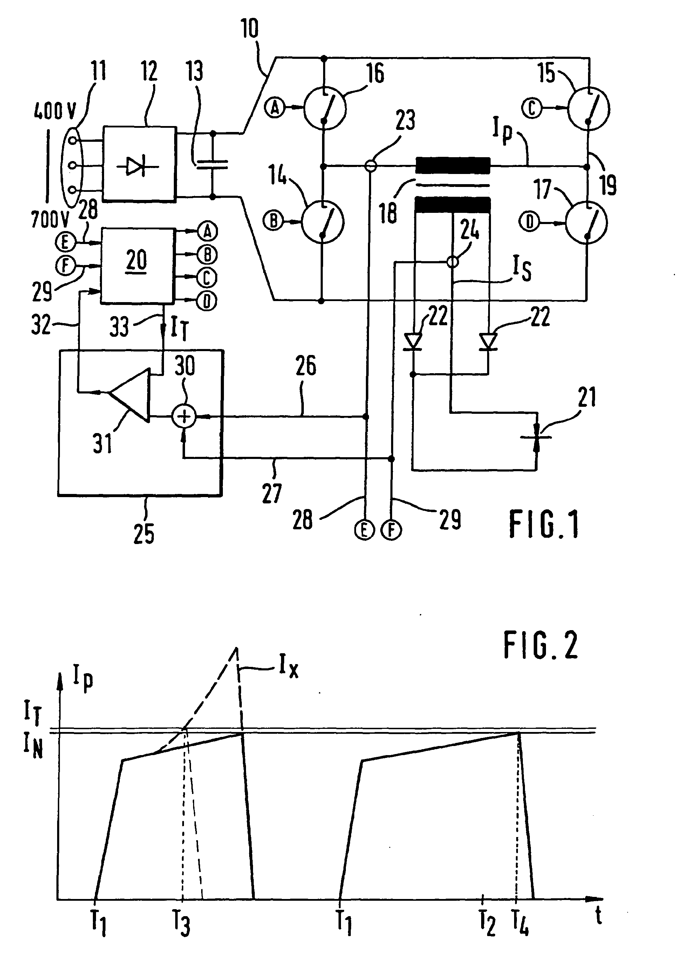

Es zeigen Figur 1 ein Strukturschaubild einer Umrichterschweißanordnung, Figur 2 Strompulse zur Veranschaulichung der Sättigungserkennung.

### Beschreibung

Die in der Figur 1 dargestellte Schweißanordnung basiert auf einer bekannten Umrichterschweißanordnung mit Gleichspannungszwischenkreis 10, welcher durch einen an ein Dreiphasennetz 11 angeschlossenen Gleichrichter 12 bereitgestellt wird. Ein Kondensator 13 dient zur Glättung der im Zwischenkreis 10 anliegenden Gleichspannung. Mit Hilfe von 4 in H-Brückenschaltung angeordneten Leistungsschaltern 14 bis 17 wird aus der Zwischenkreisgleichspannung eine pulsweitenmodulierte Wechselspannung erzeugt, welche an der Eingangsseite eines Schweißtransformators 18 anliegt. Die Ansteuerung der Leistungsschalter 14 bis 17 erfolgt durch eine Schweißsteuerung 20. An der Sekundärseite des Schweißtransformators 18 liegt eine Niedervoltwechselspannung an, die, üblicherweise nach vorhergehender Gleichrichtung mit Dioden 22, einer Schweißzange 21 zugeführt ist. Der Schweißtransformator 18 ist bezüglich seines Wicklungsverhältnisses zum Betrieb mit der niedrigsten von mehreren möglichen Netzspannungen ausgelegt, an der er betreibbar sein soll. Bezüglich seiner Isolationsfestigkeit muß er auf die höchste mögliche Betriebsnetzspannung abgestimmt sein; bei üblichen Transformatoren, deren Isolationsfestigkeit in der Regel bei wenigstens dem 10-fachen der Netzspannung liegt, ist dies gewährleistet, ohne daß es zusätzlicher technischer Maßnahmen bedarf.

Schweißanordnungen des vorbeschriebenen Typs sind bisher in der Regel zum Betrieb an Netzen mit einer festen Spannung von zum Beispiel 400 Volt ausgelegt. Entsprechend den gewünschten Schweißströmen ergibt sich eine bestimmte Dimensionierung der Leistungsschalter 14 bis 17, sowie Schweißtransformators 18. Weil der Schweißtransformator 18 dabei schon aus Kostengründen regelmäßig genau auf eine zugrundegelegte Netzspannung abgestimmt wird, ist ein Betrieb der Schweißanordnung an Netzen mit einer höheren Spannung nicht möglich; auch dann nicht, wenn sich die zu übertragenden Energiemengen dabei nicht erhöhen. Zwar kann ein Großteil üblicher Schweißtransformatoren auch bei über der angegebenen Dauernennspannung liegenden Spannungen betrieben werden, wenn die Dauer der zu übertragenden Spannungspulse entsprechend verkürzt wird. Im Rahmen einer Schweißgüteregelung kommt es jedoch regelmäßig zu Stelleingriffen, die eine erhöhte Energieübertragung in Form einer längeren Pulsdauer bei erhöhter Spannung erfordern. Solche Stelleingriffe führen zwangsläufig zu einer Sättigung des Transformators, in deren Folge der Strom im Primärkreis stark ansteigt und die über den Transformator übertragene Leistung abfällt.

Zur Überwindung dieser Schwierigkeit erfolgt bei der vorgeschlagenen Schweißanordnung eine Sättigungsüberwachung. Im wechselspannungführenden Primärkreis 19 des Schweißtransformators 18 sowie im Sekundärkreis befinden sich hierfür jeweils Stromsensoren 23, 24 zur Erfassung des Primärstromes I_{P} bzw. des Sekundärstromes I_{S}. Die über die Stromsensoren 23, 24 erhaltenen Meßsignale sind über Verbindungsleitungen 26, 27 einer Sättigungsüberwachungseinrichtung 25 zugeführt, die über zwei Signalwege 28, 29 mit der Schweißsteuerung 20 verbunden ist. Über den ersten Signalweg 29 wird der Sättigungsüberwachungseinrichtung 25 ein Stromschwellwert I_{T} zugeführt. Über den zweiten Signalwert 28 übermittelt die Sättigungsüberwachungseinrichtung 25 der Schweißsteuerung 20 ein Fehlersignal, wenn sie eine Sättigung detektiert hat. Bestandteil der Sättigungsüberwachungseinrichtung 25 ist zweckmäßig eine Summierstelle 30, welche die Meßsignale für den Primärstrom I_{P} und den Sekundärstrom I_{S} gewichtet addiert. Der Summierstelle 30 nachgeschaltet ist ein Komparator 31, auf dessen zweiten Eingang das Sättungsschwellwertsignal I_{T} geschaltet ist. Den Ausgang des Komparators 31 bildet der auf die Schweißsteuerung 20 führende Signalweg 32. Bei vereinfachter Ausführung der Sättigungsüberwachungseinrichtung 25 ohne Summierstelle 30 ist dem Komparator das Meßsignal für den Primärstrom I_{P} direkt zugeführt.

Zum Erkennen einer Sättigung wird, wie in Figur 2 veranschaulicht, ausgenützt, daß in diesem Fall der Primärstrom I_{P} über einen im Rahmen eines normalen Pulses erreichbaren Maximalwert I_{N} ansteigt und etwa das in Figur 2 mit Iₓ dargestellte Verhalten zeigt. Der Sättigungserkennungseinrichtung 25 wird deshalb von der Schweißsteuerung 20 ein knapp oberhalb des in normalen Pulsen erreichbaren Strommaximalwertes IN liegender Referenzwert I_{T} vorgegeben, mit dem die Sättigungserkennungseinrichtung 25 die mittels des Sensors 23 für den Primärstrom I_{P} gemessenen Stromistwerte fortlaufend vergleicht. Erreicht der für den Primärstrom I_{P} gemessene Wert den Referenzwert I_{T}, in Figur 2 zum Zeitpunkt T₃, gibt die Sättigungserkennungseinrichtung 25 über den Signalweg 32 ein Warnsignal an die Schaltsteuerung 20 ab, aufgrund dessen diese den laufenden Strompuls abbricht. Ein trotzdem möglicherweise bereits eingetretener Sättigungseffekt wird mit dem nächsten Strompuls entgegengesätzer Polarität kompensiert, indem dieser über den vorgesehenen Abschaltzeitpunkt T₂ hinaus verlängert wird, bis die Stromamplitude den Wert des Schwellwertes I_{T} erreicht, in Figur 2 zum Zeitpunkt T₄. Aufgrund des so sich einstellenden ungleichlangen Flusses von strömenentgegengesetzer Polarität wird der Transformator magnetisch resymmetrisiert. Das Vorgehen wird wiederholt, bis der Primärstrom I_{P} keine Sättigungserscheinungen durch vorzeitiges Erreichen des Stromschwellwertes I_{T} anzeigt.

Um Störgrößen besser ausregeln zu können, ist es sinnvoll, in die Sättigungsüberwachung auch den Sekundärstrom I_{S} einzubeziehen. Zweckmäßig geschieht dies derart, daß die für den Primärstrom I_{P} und die im Sekundärstrom I_{S} gemessenen Signale mit einem bestimmten Wichtungsverhältsnis zusammengefaßt werden.

Unter Beibehaltung des zugrunde liegenden Konzeptes besteht hinsichtlich der Realisierung der vorgeschlagenen Schweißanordnung ein weiter Gestaltungsspielraum. So kann die Früherkennung einer Sättigung hinsichtlich der Ansprechgeschwindigkeit verbessert werden, indem anstelle von Iststromsignalen I_{P} und I_{S} zeitabgeleitete Signale ausgewertet werden. Entsprechend ist als Schwellwert dann ein maximaler Stromsteigungswert anzusetzen. Sinnvoll ist es, Sättigungserkennungseinrichtung und Schweißsteuerung in einem Gerät zu realisieren. Selbstverständlich kann weiterhin die im Ausführungsbeispiel für die Sättigungsüberwachungseinrichtung 25 vorgeschlagene Signalverarbeitung durch eine andere gleichwertige ersetzt werden. In einem Praxisversuch hat sich gezeigt, daß eine erfindungsgemäße Schweißanordnung mit zum Betrieb an einem 400 V-Netz ausgelegten Schweißtransformator ohne weiteres an einem 700 V-Netz betreibbar ist.

## Patentansprüche

1. Umrichterschweißanordnung mit einem Gleichrichter (12) und einem Schweißtransformator (18), dem die durch Wechselrichtung aus der gleichgerichteten Netzspannung (11) erzeugte Wechselspannung direkt zugeführt ist und einer Sättigungsüberwachungseinrichtung (25), welche ein Fehlersignal (32) erzeugt und die Stromzufuhr zum Schweißtransformator (18) unterbricht, wenn der über den Schweißtransformator (18) fließende Primärstrom (Ip) einen Schwellwert (I_{T}) übersteigt,
**dadurch gekennzeichnet, dass**
der Gleichrichter (12) eine variable Netzspannung (11) mit einem unteren und einem oberen Grenzwert als Eingangsgröße hat; der Schweißtransformator (18) bezüglich seines Wicklungsverhältnisses auf den unteren Grenzwert der Netzspannung (11) und bezüglich seiner Isolationsfestigkeit auf den oberen Grenzwert der Netzspannung (11) ausgelegt ist; die Sättigungsüberwachungseinrichtung (25) Messwerte für den Primärstrom (I_{P}) und den Sekundärstroms (I_{S}) summiert, mit dem Schwellwert (I_{T}) vergleicht und ein Fehlersignal (32) ableitet.

2. Umrichterschweißanordnung nach Anspruch 1, **dadurch gekennzeichnet, dass** der Primärstromistwert (I_{P}) und der Sekundärstromistwert (I_{S}) verwendet wird und diese gewichtet zusammengefasst sind, wobei als Schwellwert (I_{T}) ein Referenzwert dient.

3. Umrichterschweißanordnung nach Anspruch 1, **dadurch gekennzeichnet, dass** die zeitlichen Ableitungen des Primärstromes (I_{P}) und des Sekundärstromes (I_{S}) verwendet werden, wobei als Schwellwert (I_{T}) ein maximaler Stromsteigungswert dient.

4. Umrichterschweißanordnung nach einem der vorhergehenden Ansprüche, **dadurch gekennzeichnet, dass** die Sättigungsüberwachung eine Transformatorsättingungsüberwachung ist.

5. Umrichterschweißanordnung nach einem der vorhergehenden Ansprüche, **dadurch gekennzeichnet, dass** die Isolationsfestigkeit des Transformators (18) in der Größenordnung des 10-fachen des unteren Grenzwertes der Netzspannung (11) liegt.

6. Umrichterschweißanordnung nach einem der vorhergehenden Ansprüche, **dadurch gekennzeichnet, dass** die Erfassung der Ströme (I_{P}, I_{S}) mittels Stromsensoren (23, 24) erfolgt.

7. Umrichterschweißanordnung nach einem der vorhergehenden Ansprüche, **dadurch gekennzeichnet, dass** die Sättigungsüberwachung (25) mittels zweier Signalwege (32, 33) mit einer Schweißsteuerung (20) verbunden ist, wobei die Schweißsteuerung (20) über den ersten Signalweg (33) den Schwellwert (I_{T}) oder den Stromsteigungswert der Sättigungsüberwachung (25) zuführt und über den zweiten Signalweg (32) die Sättigungsüberwachung (25) der Schweißsteuerung (20) das Fehlersignal (32) zuführt.

8. Umrichterschweißanordnung nach einem der vorhergehenden Ansprüche, **dadurch gekennzeichnet, dass** der Vergleich mittels eines Komparators (31) erfolgt, wobei der Komparatorausgang das Fehlersignal (32) an die Steuerung (20) liefert.

9. Umrichterschweißanordnung nach einem der vorhergehenden Ansprüche, **dadurch gekennzeichnet, dass** ein bereits eingetretener Sättigungseffekt mit einem Stromimpuls entgegengesetzter Polarität zum vorherigen Stromimpuls kompensiert wird.

## Claims

1. Converter welding arrangement comprising a rectifier (12) and a welding transformer (18), to which the AC voltage produced by inversion from the rectified mains voltage (11) is fed directly, and a saturation monitoring device (25), which generates a fault signal (32) and interrupts the current supply to the welding transformer (18) if the primary current (I_{P}) flowing via the welding transformer (18) exceeds a threshold value (I_{T})
**characterized in that**
the rectifier (12) has a variable mains voltage (11) having a lower and an upper limit value as input quantity; the welding transformer (18) is designed for the lower limit value of the mains voltage (11) with regard to its turns ratio and for the upper limit value of the mains voltage (11) with regard to its insulation strength; the saturation monitoring device (25) sums measured values for the primary current (I_{P}) and the secondary current (I_{S}), compares that with the threshold value (I_{T}) and derives a fault signal (32).

2. Converter welding arrangement according to Claim 1, **characterized in that** the primary current actual value (I_{P}) and the secondary current actual value (I_{S}) are used and these are combined in weighted fashion, a reference value serving as threshold value (I_{T}).

3. Converter welding arrangement according to Claim 1, **characterized in that** the time derivatives of the primary current (I_{P}) and of the secondary current (I_{S}) are used, a maximum current gradient value serving as the threshold value (I_{T}).

4. Converter welding arrangement according to one of the preceding claims, **characterized in that** the saturation monitoring is a transformer saturation monitoring.

5. Converter welding arrangement according to one of the preceding claims, **characterized in that** the insulation strength of the transformer (18) is of the order of magnitude of 10 times the lower limit value of the mains voltage (11).

6. Converter welding arrangement according to one of the preceding claims, **characterized in that** the currents (I_{P}, I_{S}) are detected by means of current sensors (23, 24).

7. Converter welding arrangement according to one of the preceding claims, **characterized in that** the saturation monitoring (25) is connected to a welding controller (20) by means of two signal paths (32, 33), the welding controller (20) feeding the threshold value (I_{T}) or the current gradient value to the saturation monitoring (25) via the first signal path (32) and the saturation monitoring (25) feeding the fault signal (32) to the welding controller (20) via the second signal path (32).

8. Converter welding arrangement according to one of the preceding claims, **characterized in that** the comparison is effected by means of a comparator (31), the comparator output supplying the fault signal (32) to the controller (20).

9. Converter welding arrangement according to one of the preceding claims, **characterized in that** a saturation effect that has already occurred is compensated for by means of a current pulse of opposite polarity with respect to the previous current pulse.

## Revendications

1. Convertisseur de soudage comprenant un redresseur (12) et un transformateur de soudage (18) recevant directement la tension alternative générée par ondulations à partir de la tension de réseau (11), redressée et d'une installation de surveillance de saturation (25) générant un signal de défaut (32) et coupant l'alimentation en courant du transformateur de soudage (18) si le courant primaire (Iₚ) traversant le transformateur de soudage (18) dépasse un seuil (I_{T}),
**caractérisé en ce que**
le redresseur (12) reçoit comme grandeur d'entrée une tension de réseau (11), variable, avec une valeur limite inférieure et une valeur limite supérieure,
le transformateur de soudage (18) a un rapport d'enroulement conçu en fonction de la valeur limite inférieure de la tension de réseau (11) et sa tenue à l'isolation est conçue en fonction de la valeur limite supérieure de la tension de réseau (11), et
l'installation de surveillance de saturation (25) additionne les valeurs de mesure du courant primaire (Iₚ) et du courant secondaire (Iₛ) pour les comparer au seuil (I_{T}) et en déduire un signal de défaut (32).

2. Convertisseur de soudage selon la revendication 1,
**caractérisé en ce que**
la valeur réelle du courant primaire (Iₚ) et la valeur réelle du courant secondaire (Iₛ) s'utilisent pour être combinées de façon pondérée et le seuil (I_{T}) sert de valeur de référence.

3. Convertisseur de soudage selon la revendication 1,
**caractérisé en ce qu'**
on utilise la dérivée en fonction du temps du courant primaire (Iₚ) et du courant secondaire (Iₛ), et comme seuil (I_{T}) on utilise une pente maximale du courant.

4. Convertisseur de soudage selon l'une des revendications précédentes,
**caractérisé en ce que**
la surveillance en saturation est une surveillance de saturation du transformateur.

5. Convertisseur de soudage selon l'une des revendications précédentes,
**caractérisé en ce que**
la tenue en isolation du transformateur (18) est de l'ordre de grandeur de 10 fois la valeur limite inférieure de la tension de réseau (11).

6. Convertisseur de soudage selon l'une des revendications précédentes,
**caractérisé par**
des capteurs de courant (23, 24) pour saisir les courants (Iₚ, Iₛ).

7. Convertisseur de soudage selon l'une des revendications précédentes,
**caractérisé en ce que**
la surveillance de saturation (25) est reliée à la commande de soudage (20) par deux chemins de transmission de signaux (32, 33), cette commande de soudage (20) recevant par le premier chemin de signal (33), le seuil (I_{T}) ou la pente du courant de l'installation de surveillance de saturation (25), et l'installation de surveillance de saturation (25) de la commande de soudage (20) reçoit le signal de défaut par le second chemin de signal (32).

8. Convertisseur de soudage selon l'une des revendications précédentes,
**caractérisé en ce que**
la comparaison se fait à l'aide d'un comparateur (31) et la sortie du comparateur fournit le signal de défaut (32) à la commande (20).

9. Convertisseur de soudage selon l'une des revendications précédentes,
**caractérisé en ce qu'**
on compense un effet de saturation déjà produit par une impulsion de courant de polarité opposée à celle de l'impulsion de courant précédente.
